# EUROPÄISCHE PATENTSCHRIFT

(11) **EP 1 082 805 B1**
(45) Veröffentlichungstag und Bekanntmachung des Hinweises auf die Patenterteilung: **25.02.2004**
(21) Anmeldenummer: 99923294.5
(22) Anmeldetag: 27.05.1999
(51) Int. Cl.: H02M 1/10

(54) **SPANNUNGSUMSCHALTVORRICHTUNG**
VOLTAGE SWITCH-OVER DEVICE
DISPOSITIF DE COMMUTATION DE TENSION

(30) Priorität: 29.05.1998 AT 91998
(43) Veröffentlichungstag der Anmeldung: 14.03.2001
(73) Patentinhaber: Fronius International GmbH, 4643 Pettenbach (AT)
(72) Erfinder: OBERZAUCHER, Friedrich, A-4600 Wels (AT); KRENHUBER, Georg, A-4650 Lambach (AT)
(74) Vertreter: Secklehner, Günter, Dr.
(86) Internationale Anmeldenummer: PCT/AT1999/000132
(87) Internationale Veröffentlichungsnummer: WO 1999/063649

(56) Entgegenhaltungen:
- EP-A- 0 021 714
- EP-A- 0 476 278
- US-A- 5 461 297

## Beschreibung

Die Erfindung betrifft eine Spannungsumschaltvorrichtung sowie ein Verfahren zum Steuern der Spannungsumschaltvorrichtung, wie sie im Oberbegriff des Anspruches 1 beschrieben ist.

Aus der EP 0 476 278 A2 ist ein Verfahren zum Steuern einer Spannungsumschaltvorrichtung bekannt, bei dem über eine Ladevorrichtung zwei Speicherelemente auf einen entsprechenden Energiewert aufgeladen werden, wobei die von einer Energiequelle gelieferte Energie über einen Netzgleichrichter von einer Wechselspannung in eine Gleichspannung umgewandelt wird, wodurch ein Stromkreis mit einem Verbraucher aufgebaut wird. Während des Ladevorganges für die Speicherelemente wird über eine Netzauswertevorrichtung die Höhe der von der Energiequelle gelieferten Energie ausgewertet bzw. ermittelt, wobei entsprechend der festgestellten Höhe der gelieferten Energie ein weiterer schaltbarer Netzgleichrichter an die Energiequelle an- bzw. abgeschaltet wird.

Weiters ist aus der EP 0021 714 A1 eine Gleichrichterstromversorgungsschaltung bekannt, bei der wiederum von einer Energiequelle unter Zwischenschaltung eines Netzgleichrichters zwei Speicherelemente zum Versorgen eines Verbrauchers mit Energie versorgt werden.

Es sind weiters Spannungsumschaltvorrichtungen bekannt, die für die Ansteuerung von Leistungsschaltnetzteilen verwendet werden. Hierzu ist die Spannungsumschaltvorrichtung derart ausgerichtet, daß für jede mögliche Spannungshöhe, insbesondere für 230 V und 400 V Spannungsnetze, eine eigene Schaltgruppe angeordnet ist, wobei bei entsprechender Auswertung der gelieferten Spannungshöhe auf die entsprechende Schaltgruppe über eine Schaltvorrichtung umgeschaltet wird. Die einzelnen Schaltgruppen bestehen beispielsweise aus einem Netzgleichrichter sowie einem Speicherelement. Die einzelnen für die unterschiedlichen Spannungshöhen angeordneten Schaltgruppen werden dazu parallel zueinander geschaltet, wobei über eine entsprechende Schaltvorrichtung eine entsprechende Schaltgruppe aktiviert wird. Nachteilig ist hierbei, daß die einzelnen Schaltgruppen unabhängig voneinander dimensioniert werden müssen, sodaß durch die Verwendung von unterschiedlichen Bauelementen die Kosten einer derartigen Spannungsumschaltvorrichtung relativ hoch sind.

Der vorliegenden Erfindung liegt die Aufgabe zugrunde, eine Spannungsumschaltvorrichtung zu schaffen, bei der in einfacher Form eine Umschaltung von einer Energiequelle mit einer entsprechenden Spannungshöhe auf eine weitere Energiequelle mit einer anderen Spannungshöhe ermöglicht wird.

Diese Aufgabe der Erfindung wird durch die Merkmale des Kennzeichenteils des Anspruches 1 gelöst. Vorteilhaft ist hierbei, daß alle eingesetzten Bauelemente, wie die Netzgleichrichter, die Speicherelemente usw., sowohl bei niedriger als auch bei hoher Netzspannung gleich belastet und eingesetzt werden, sodaß eine kostengünstige Herstellung der Spannungsumschaltvorrichtung erzielt wird.

Weitere vorteilhafte Ausbildungen sind in den Ansprüchen 2 bis 11 beschrieben. Die damit erzielbaren Vorteile sind der detaillierten Figurenbeschreibung zu entnehmen.

Die Erfindung wird im nachfolgendem anhand der in den Zeichnungen dargestellten Ausführungsbeispiele näher erläutert.

Es zeigen:
- Fig. 1: ein Schaltschema einer erfindungsgemäßen Spannungsumschaltvorrichtung in vereinfachter, schematischer Darstellung;
- Fig. 2: ein weiteres Ausführungsbeispiel der erfindungsgemäßen Spannungsumschaltvorrichtung in vereinfachter, schematischer Darstellung;
- Fig. 3: ein Ausführungsbeispiel für einen an den erfindungsgemäßen Spannungsumschaltvorrichtungen nach den Fig. 1 und 2 angeschlossenen Verbraucher in vereinfachter, schematischer Darstellung;
- Fig. 4: ein anderes Ausführungsbeispiel der erfindungsgemäßen Spannungsumschaltvorrichtung in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltene Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale aus den gezeigten, unterschiedlichen Ausführungsbeispielen für sich eigenständige, erfindungsgemäße Lösungen darstellen.

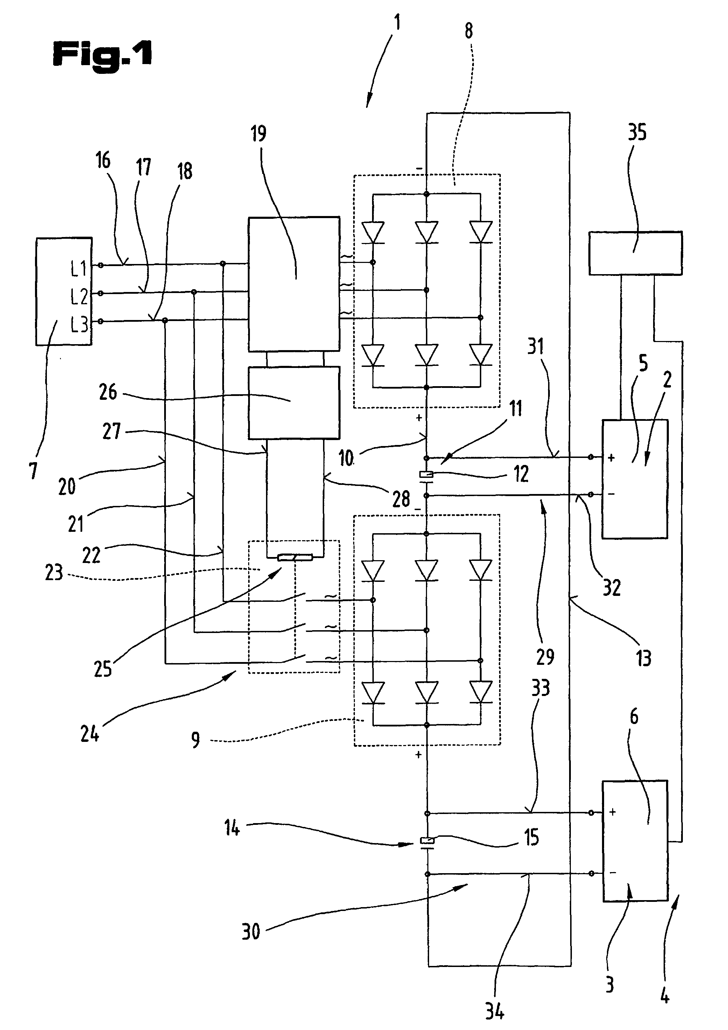

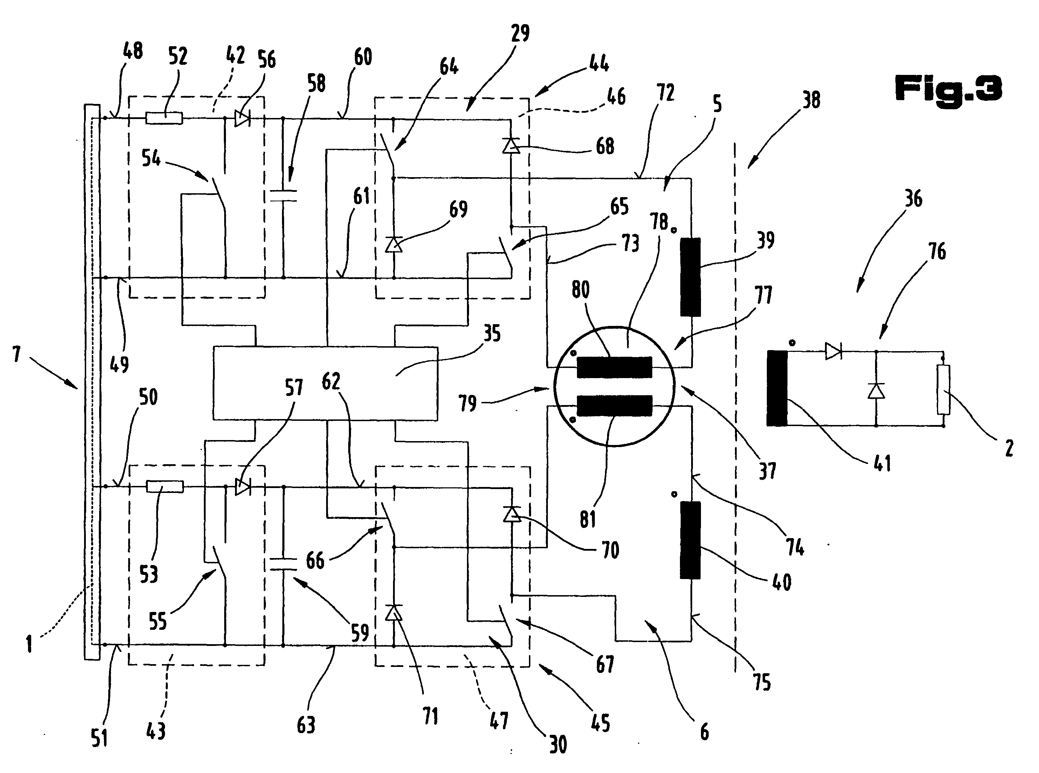

In Fig. 1 ist eine Spannungsumschaltvorrichtung 1 für einen oder mehrere Verbraucher 2, 3 dargestellt. Der oder die Verbraucher 2, 3 können beispielsweise durch ein primärgetaktetes Leistungsschaltnetzteil 4 gebildet werden. Hierzu ist in Fig. 1 schematisch ein Primärmodul 5, 6 des primärgetakteten Leistungsschaltnetzteils 4 angedeutet. Eine spezielle Ausbildung des Verbrauchers 2, 3 bzw. des Leistungsschaltnetzteils 4 wird anschließend in Fig. 3 beschrieben.

Die Spannungsumschaltvorrichtung 1 hat die Aufgabe, die von einer Energiequelle 7 gelieferte Energie auszuwerten und entsprechend der Höhe der gelieferten Energie eine Umschaltung, beispielsweise bei einem ein- oder mehrphasigen Netz von 230 V auf 400 V oder umgekehrt vorzunehmen.

Hierzu weist die Spannungsumschaltvorrichtung 1 zwei in Serie geschaltete Netzgleichrichter 8, 9 auf. Der Netzgleichrichter 8 wird über eine Leitung 10 unter Zwischenschaltung eines Speicherelementes 11, insbesondere eines Kondensators 12, mit dem Netzgleichrichter 9 verbunden, wobei das positive Potential des Netzgleichrichters 8 über die Leitung 10 mit dem negativen Potential des Netzgleichrichters 9 zusammengeschaltet wird.

Das positive Potential des weiteren Netzgleichrichters 9 wird über eine Leitung 13 mit dem negativen Potential des Netzgleichrichters 8 unter Zwischenschaltung eines weiteren Speicherelementes 14, insbesondere eines Kondensators 15, verbunden, wodurch dadurch eine Reihenschaltung der beiden Netzgleichrichter 8, 9 unter Zwischenschaltung jeweils eines Speicherelementes 11, 14 geschaffen wird.

Die Netzgleichrichter 8, 9 werden aus einer zum Stand der Technik zählenden Gleichrichterbrücke gebildet. Selbstverständlich ist es möglich, daß die Netzgleichrichter 8, 9 durch einzelne Dioden, wie sie schematisch dargestellt sind, ausgeführt werden können. Bei dem dargestellten Ausführungsbeispiel ist die Energiequelle 7 aus einem mehrphasigen Netz, insbesondere aus einem Dreiphasennetz, gebildet, wodurch von der Energiequelle 7 nunmehr zumindest drei Netzanschlußleitungen 16 bis 18 mit der Spannungsumschaltvorrichtung 1 verbunden sind. Zum Verbinden der Spannungsumschaltvorrichtung 1 mit der Energiequelle 7 können handelsübliche Netzstecker eingesetzt werden, die jedoch in dem dargestellten Ausführungsbeispiel nicht eingezeichnet sind.

Die Energiequelle 7 wird über die Netzanschlußleitungen 16 bis 18 mit dem ersten Netzgleichrichter 8, wie es aus dem Stand der Technik zum Gleichrichten einer Wechselspannung bekannt ist, verbunden. Damit beim Aktivieren der Spannungsumschaltvorrichtung 1 durch die Anordnung der Speicherelemente 11, 14 kein Kurzschluß zwischen den einzelnen Netzanschlußleitungen 16 bis 18 auftritt, ist zwischen der Energiequelle 7 und dem ersten Netzgleichrichter 8 eine Ladevorrichtung 19 angeordnet. Die Ladevorrichtung 19 hat die Aufgabe, die einzelnen Speicherelemente 11, 14, insbesondere die einzelnen Kondensatoren 12, 15, beim Verbinden der Spannungsumschaltvorrichtung 1 mit der Energiequelle 7 langsam auf einen entsprechenden Energiewert aufzuladen, wodurch ein Kurzschluß zwischen den einzelnen Netzanschlußleitungen 16 bis 18 vermieden wird. Hierzu kann jede beliebige aus dem Stand der Technik bekannte Ladevorrichtung 19 zum Laden der Kondensatoren 12, 15 eingesetzt werden.

Der weitere Netzgleichrichter 9 wird über einzelne Netzleitungen 20 bis 22 mit den Netzanschlußleitungen 16 bis 18 verbunden, d.h., daß durch das Verbinden der Netzanschlußleitungen 16 bis 18 über die Netzleitungen 20 bis 22 mit dem weiteren Netzgleichrichter 9 eine weitere Gleichrichtung der Wechselspannung von der Energiequelle 7 über den weiteren Netzgleichrichter 9 erfolgt. Durch eine derartige Ausbildung wird von einer Serienschaltung der beiden Netzgleichrichter 8, 9 auf eine Parallelschaltung der beiden Netzgleichrichter 8, 9 umgeschaltet. Damit jedoch beide Schaltsysteme, insbesondere die Serienschaltung der beiden Netzgleichrichter 8 und 9 und die Parallelschaltung der beiden Netzgleichrichter 8 und 9, verwendet werden können, wird in den Netzleitungen 20 bis 22 für den Netzgleichrichter 9 eine Schaltvorrichtung 23 angeordnet, über welche der Netzgleichrichter 9 mit der Energiequelle 7 schaltbar verbunden ist.

Die Schaltvorrichtung 23 hat die Aufgabe, daß die Netzleitungen 20 bis 22 durch einzelne steuerbare Schalter 24 bzw. Kontakte unterbrochen werden, sodaß bei geöffneten Schaltern 24 eine Serienschaltung der beiden Netzgleichrichter 8 und 9 geschaffen wird, wogegen bei Aktivierung der Schaltervorrichtung 23, also bei geschlossenen Schaltern 24, eine Parallelschaltung der beiden Netzgleichrichter 8, 9 erreicht wird. Die Schaltvorrichtung 23 kann beispielsweise bei Verwendung eines dreiphasigen Netzes als dreipoliger AC-Schalter, insbesondere als Schütz, ausgebildet werden, sodaß durch Beaufschlagung von Energie an ein Erregermodul 25, insbesondere eine Spule, die einzelnen Schalter 24 bzw. Kontakte geschlossen bzw. geöffnet werden können. Selbstverständlich ist es möglich, daß weitere aus dem Stand der Technik bekannte Systeme zum Schalten von Leitungen, insbesondere den Netzleitungen 20 bis 22, eingesetzt werden können. Hierzu ist es beispielsweise möglich, daß die Schaltvorrichtung 23 durch ein elektronisches Lastrelais oder durch Triac's oder einzelne Schalter bzw. durch ein Schütz ausgebildet sein kann.

Die Steuerung der Schaltvorrichtung 23 erfolgt von einer mit der Ladevorrichtung 19 gekoppelten Netzauswertevorrichtung 26, d.h., daß das Erregermodul 25 über Leitungen 27, 28 mit der Netzauswertevorrichtung 26 verbunden ist, sodaß durch Beaufschlagung von Energie über die Leitungen 27, 28 eine Erregung des Erregermoduls 25 zustande kommt, sodaß die dem Erregermodul 25 zugeordneten Schalter 24 bzw. Kontakte geschlossen bzw. geöffnet werden können. Hierzu ist es selbstverständlich möglich, daß als Schalter 24 sowohl Öffner bzw. Schließer eingesetzt werden können.

Die Netzauswertevorrichtung 26 hat die Aufgabe, die von der Energiequelle 7 gelieferte Energie zu messen bzw. deren Höhe zu ermitteln, sodaß bei Überschreiten eines festgelegten Wertes von der Netzauswertevorrichtung 26 eine Ansteuerung der Schaltvorrichtung 23 durchgeführt wird. Hierzu ist es selbstverständlich möglich, daß jede beliebige aus dem Stand der Technik bekannte Netzauswertevorrichtung 26 beispielsweise durch Bilden einer Spannungsmeßvorrichtung mit einer entsprechenden Steuervorrichtung oder jegliche andere Arten eingesetzt werden können. Durch die Kopplung der Netzauswertevorrichtung 26 mit der Ladevorrichtung 19 wird nun erreicht, daß beim Aktivieren der Spannungsumschaltvorrichtung 1 gleichzeitig mit dem Ladevorgang für die Speicherelemente 11, 14 die Netzauswertevorrichtung 26 die Höhe des Energieflusses von der Energiequelle 7 überwacht, sodaß bei Überschreiten des vorgegebenen Wertes von der Netzauswertevorrichtung 26 die Schaltvorrichtung 23 angesteuert werden kann.

Um die einzelnen Verbraucher 2, 3 bzw. das primärgetaktete Leistungsschaltnetzteil 4 mit der Spannungsumschaltvorrichtung 1 verbinden zu können, wird über jedes Speicherelement 11, 14 ein Stromkreis 29, 30 gebildet, d.h., daß die einzelnen, schematisch dargestellten Primärmodule 5, 6 für das primärgetaktete Leistungsschaltnetzteil 4 über Leitungen 31, 32 und 33, 34 mit den einzelnen Speicherelementen 11, 14 verbunden sind.

Durch die Bildung der beiden Stromkreise 29, 30 wird erreicht, daß zwei unabhängige Verbraucher 2, 3 mit der Spannungsumschaltvorrichtung 1 betrieben werden können. Es ist auch möglich, daß durch entsprechende Ausbildung des primärgetakteten Leistungsschaltnetzteils 4 nur ein einziger Verbraucher 2 oder 3 mit Energie versorgt werden kann, wobei hierzu die einzelnen Primärmodule 5, 6 des Leistungsschaltnetzteils 4 anschließend über einen gemeinsamen Transformator eine Versorgung des Verbrauchers 2 durchführen. Bei Verwendung von nur einem Verbraucher 2 oder 3 ist es jedoch notwendig, daß für die Gewährleistung der richtigen Funktion der Spannungsumschaltvorrichtung 1 über jedem Speicherelement 11, 14 wiederum ein eigener Stromkreis 29, 30 aufgebaut werden muß.

Damit eine Steuerung der einzelnen Primärmodule 5, 6 bzw. der Verbraucher 2, 3 stattfinden kann, ist es möglich, daß eine Steuervorrichtung 35 angeordnet sein kann. Die Steuervorrichtung 35 kann beispielsweise aus einer Mikroprozessorsteuervorrichtung gebildet werden, sodaß ein entsprechender Steuervorgang der Primärmodule 5, 6, wie sie aus dem Stand der Technik bekannt sind, durchgeführt werden kann. Selbstverständlich ist es möglich, daß die Netzauswertevorrichtung 26 über eine oder mehrere Leitungen 31 bis 34 mit der Steuervorrichtung 35 verbunden werden kann, sodaß von der Steuervorrichtung 35 der entsprechende Wert zum Aktivieren der Schaltvorrichtung 23 für die Netzauswertevorrichtung 26 festgelegt bzw. geändert werden kann. Es ist auch möglich, daß die Ladevorrichtung 19 mit der Steuervorrichtung 35 verbunden wird, sodaß beim Hochladen der einzelnen Speicherelemente 11, 14, insbesondere bei abgeschlossenem Hochladevorgang, die Ladevorrichtung 19 ein Steuersignal an die Steuervorrichtung 35 weiterleiten kann, wodurch die Steuervorrichtung 35 anschließend die einzelnen Primärmodule 5, 6 für den oder die Verbraucher 2, 3 aktivieren kann.

Wird die Spannungsumschaltvorrichtung 1 mit der Energiequelle 7 verbunden, so fließt von der Energiequelle 7 Energie an die Ladevorrichtung 19. Durch das Aktivieren der Ladevorrichtung 19 mit dem Energiefluß werden nunmehr die einzelnen Speicherelemente 11 und 14 auf einen entsprechend vordimensionierten Wert aufgeladen, d.h., daß zuerst von der Ladevorrichtung 19 der direkte Energiefluß über den ersten Netzgleichrichter 8 unterbrochen wird und anschließend über die Ladevorrichtung 19 eine Durchschaltung des Energieflusses von der Energiequelle 7 zum ersten Netzgleichrichter 8 durchgeführt wird, wobei eine kontinuierliche Spannungserhöhung erreicht wird.

Da die Schaltvorrichtung 23 von der Netzauswertevorrichtung 26 bei der Inbetriebnahme der Spannungsumschaltvorrichtung 1 nicht aktiviert ist und somit die einzelnen Schalter 24 geöffnet sind, wird ein Energiefluß von den Netzanschlußleitungen 16 bis 18 über die Netzleitungen 20 bis 22 an den weiteren Netzgleichrichter 9 unterbunden. Hierdurch sind die beiden Netzgleichrichter 8 und 9 in Serie geschaltet, d.h., daß über die Ladevorrichtung 19 gleichzeitig die Speicherelemente 11 und 14 mit Energie versorgt und somit geladen werden.

Bevor eine vollständige Energieweiterleitung der Ladevorrichtung 19 von der Energiequelle 7 zum Netzgleichrichter 8 erreicht ist, also eine vollständige Durchschaltung des Energieflusses gebildet wird, wird von der Netzauswertevorrichtung 26 entschieden, ob der zusätzliche Netzgleichrichter 9 über die Schaltvorrichtung 23 aktiviert werden soll oder nicht. Hierzu ist beispielsweise in der Netzauswertevorrichtung 26 ein entsprechender Wert hinterlegt, sodaß bei Überschreiten des Energieflusses, insbesondere der Spannungshöhe, die Schaltvorrichtung 23 deaktiviert bleibt und somit eine Reihenschaltung bzw. Serienschaltung der beiden Netzgleichrichter 8, 9 sowie der Speicherelemente 11, 14 gegeben ist. Durch die Reihenschaltung bzw. Serienschaltung der beiden Netzgleichrichter 8, 9 bzw. der Speicherelemente 11, 14 wird erreicht, daß die einzelnen Primärmodule 5, 6, die jeweils über ein Speicherelement 11, 14 einen eigenen Stromkreis 29, 30 bilden, mit der gleichen Energiemenge versorgt werden, sodaß anschließend ein Energieentzug über die einzelnen Stromkreise 29, 30 vorgenommen werden kann. Weiters wird durch die Reihenschaltung der beiden Speicherelemente 11, 14 erreicht, daß eine Spannungserhöhung im Gleichspannungsbereich der Spannungsumschaltvorrichtung 1 verhindert wird.

Würde eine Energiequelle 7 verwendet werden, bei der der Energiefluß, insbesondere die Spannungshöhe, unterhalb des in der Netzauswertevorrichtung 26 hinterlegten Wertes liegt, d.h., daß beispielsweise bei dem dargestellten Dreiphasenspannungsnetz mit einer Spannung von 3 x 400 V nur eine Energiequelle 7 verwendet wird, so würde von der Netzauswertevorrichtung 26 nach dem Laden der Speicherelemente 11, 14 und vor dem vollständigen Durchschalten des Energieflusses aufgrund des Unterschreitens des Wertes in der Netzauswertevorrichtung 26 die Schaltvorrichtung 23 aktiviert werden. Hierzu würde von der Netzauswertevorrichtung 26 ein Stromkreis über das Erregermodul 25 aufgebaut, sodaß das verwendete Relais, insbesondere die Schalter 24 des Relais, geschlossen wird bzw. werden. Durch das Schließen der Schalter 24 bzw. der Kontakte fließt nunmehr gleichzeitig ein Energiefluß von der Energiequelle 7 an den Netzgleichrichter 8 und an den Netzgleichrichter 9, wodurch eine Parallelschaltung der beiden Netzgleichrichter 8, 9 bzw. der Speicherelemente 11, 14 gebildet wird. Durch das parallele Zuführen von Energie über die beiden Netzgleichrichter 8, 9 erfolgt eine getrennte Speisung der beiden Speicherelemente 11, 14, sodaß wiederum jedem Speicherelement 11, 14 die selbe Energiemenge zur Verfügung steht. Es ist auch möglich, daß in der Netzauswertevorrichtung 26 ein Zeitglied angeordnet ist, sodaß nach Ablauf einer voreinstellbaren Zeitdauer von der Netzauswertevorrichtung 26 der tatsächliche Energiefluß zu diesem Zeitpunkt mit dem hinterlegten Wert verglichen wird und entsprechend bei Überschreitung oder Unterschreitung des hinterlegten Wertes eine Steuerung von der Netzauswertevorrichtung 26 für die Schaltvorrichtung 23 durchgeführt wird.

Durch das serielle bzw. parallele Schalten der beiden Speicherelemente 11, 14 wird erreicht, daß für unterschiedliche Energiequellen 7 mit unterschiedlich hohen Spannungen die einzelnen Bauelemente nicht auf die unterschiedlichen Energiequellen 7 abgestimmt werden müssen, sondern, daß die Bauelemente auf die maximale Leistung und die maximal zu erwartende Spannung dimensioniert sein muß.

Wird die Spannungsumschaltvorrichtung 1 mit einer Energiequelle 7, beispielsweise von 400 V, angeschlossen, so wird während des Hochladevorganges von der Netzauswertevorrichtung 26 erkannt, daß eine Energiequelle 7 verwendet wird, deren Spannungshöhe oberhalb eines vorgegebenen Soll-Wertes liegt und somit die Schaltvorrichtung 23 deaktiviert bleibt.

Die von der Energiequelle 7 gelieferte Energie versorgt nun die beiden Speicherelemente 11, 14 über die Leitung 10 und 13, d.h., daß ein kompletter Stromfluß über die beiden Speicherelemente 11, 14 von dem Netzgleichrichter 8 aufgebaut wird.

Durch die Seriellschaltung der beiden Speicherelemente 11, 14 erfolgt eine Aufteilung der gleichgerichteten Spannung in den beiden Speicherelementen 11, 14, d.h., daß in den beiden Speicherelementen 11, 14 jeweils die Hälfte der zugeführten Energie gespeichert wird. Die Halbierung der Spannung bzw. des Stromflusses wird insofern erreicht, da über jedem Speicherelement 11, 14 ein eigener Stromkreis 29, 30 mit einem eigenen Verbraucher 2, 3 bzw. mit einem gemeinsamen Verbraucher 2 oder 3 aufgebaut wird, wodurch eine Spannungserhöhung durch die Seriellschaltung der beiden Speicherelemente 11, 14 vermieden wird.

Wird dieselbe Spannungsumschaltvorrichtung 1 mit den gleichdimensionierten Bauelementen an eine Energiequelle 7, deren maximale Spannungshöhe beispielsweise 230 V beträgt, angeschlossen, so wird während des Ladevorganges von der Netzauswertevorrichtung 26 erkannt, daß die Spannungshöhe der Energiequelle 7 unterhalb des vorgegebenen Soll-Wertes liegt, sodaß nunmehr über die Netzauswertevorrichtung 26 die Schaltvorrichtung 23 aktiviert wird, d.h., daß durch die Bildung des Stromflusses über das Erregermodul 25 die einzelnen Schalter 24 geschlossen werden, sodaß gleichzeitig ein Energiefluß über die Netzanschlußleitungen 16 bis 18 an den Netzgleichrichter 8 und über die Netzleitungen 20 bis 22 an den Netzgleichrichter 9 entsteht. Durch den nunmehr geschaffenen Parallelbetrieb der einzelnen Speicherelemente 11, 14 wird erreicht, daß die einzelnen Speicherelemente 11, 14 über die beiden Netzgleichrichter 8 und 9 gleichzeitig mit Energie versorgt werden, d.h., daß das Speicherelement 11 mit Energie vom Netzgleichrichter 8 und das Speicherelement 14 mit Energie vom Netzgleichrichter 9 geladen bzw. gespeist wird, wobei durch die Energiezuführung über die beiden Netzgleichrichter 8, 9 zum Laden bzw. Versorgen der beiden Speicherelemente 11 und 14 zwei Stromkreise 29, 30 gebildet werden. Der Stromkreis 29 für das erste Speicherelement 11 bildet sich zwischen dem positiven Potential des Netzgleichrichters 8 und dem negativen Potential des Netzgleichrichters 9 aus, wogegen der zweite Stromkreis 30 für das Speicherelement 14 sich zwischen dem positiven Potential des Netzgleichrichters 9 und dem negativen Potential des Netzgleichrichters 8 ausbildet. Diese Energiemenge, die in den Speicherelementen 11, 14 gespeichert wird, entspricht dabei der selben Energiemenge, wie sie bei der Verwendung der Serienschaltung der beiden Speicherelemente 11, 14 bei einem Netz mit einer Spannungshöhe oberhalb des Soll-Wertes geschaffen wird. Bei der sogenannten Serienschaltung der beiden Netzgleichrichter 8, 9 erfolgt die Ladung bzw. die Versorgung der Speicherelemente 11, 14 von nur einem Netzgleichrichter 8, wobei der weitere Netzgleichrichter 9 zwischen den beiden Speicherelementen 11, 14 angeordnet ist und somit ein sogenannter Mittelpunkt geschaffen wird, wodurch eine Aufteilung der gelieferten Energiemenge, also eine Halbierung der gelieferten Energiemenge, durchgeführt wird, d.h., daß dadurch der oder die Verbraucher 2, 3 durch die Bildung der Stromkreise 29, 30 über die beiden Speicherelemente 11, 14 wiederum dieselbe Spannungshöhe sowie den selben Stromfluß bzw. dieselbe Energiemenge zur Verfügung hat bzw. haben, sodaß der gleiche Verbraucher 2, 3 bzw. die selben Primärmodule 5, 6, wie sie zuvor verwendet wurden, auch bei einer Energiequelle 7 mit geringerer Spannungshöhe verwendet werden können.

Der Vorteil einer derartigen Spannungsumschaltvorrichtung 1 liegt nun darin, daß die einzelnen Bauelemente der Spannungsumschaltvorrichtung 1 nur auf die maximal benötigte Leistung für den Verbraucher 2, 3 dimensioniert sein muß, ohne daß dabei berücksichtigt werden muß, daß die Spannungsumschaltvorrichtung 1 an verschiedene Energiequellen 7 mit unterschiedlichen Spannungshöhen angeschlossen werden kann.

Damit die Verbraucher 2, 3, insbesondere die Primärmodule 5, 6, jeweils einen Stromkreis 29, 30 über die beiden Speicherelemente 11, 14 aufbauen können, wird eine entsprechende Steuerung von der Steuervorrichtung 35 durchgeführt, d.h., daß durch Aktivieren der einzelnen Primärmodule 5, 6 ein Stromfluß über die Leitungen 31, 32 für den Stromkreis 29 und über die Leitungen 33, 34 für den Stromkreis 30 gebildet wird. Hierzu ist es auch möglich, daß anstelle von zwei unterschiedlichen Verbrauchern 2, 3, bevorzugt symmetrischen Verbrauchern 2, 3, ein gemeinsamer Verbraucher 2 oder 3, der über einen gemeinsamen Transformator an die beiden Primärmodule 5, 6 angeschlossen ist, betrieben werden kann. Ein derartiges Ausführungsbeispiel wird nachstehend in Fig. 3 genauer erläutert.

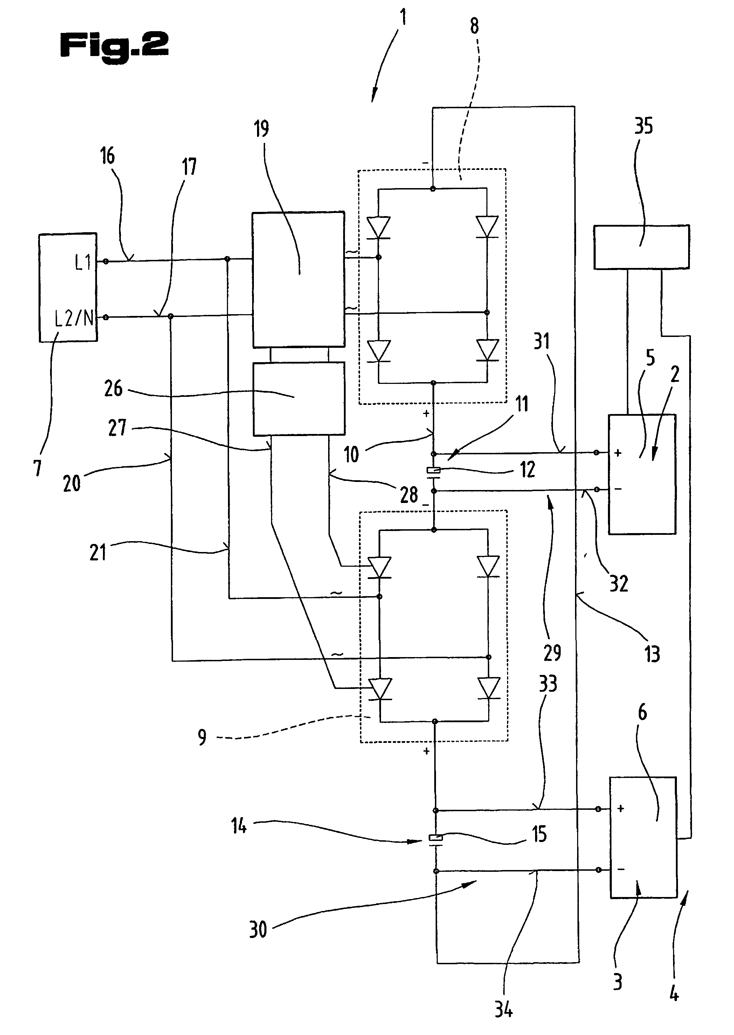

In Fig. 2 ist ein weiteres Ausführungsbeispiel der Spannungsumschaltvorrichtung 1 gezeigt.

Der Unterschied zu der in Fig. 1 dargestellten Spannungsumschaltvorrichtung 1 liegt nun darin, daß die Energiequelle 7 nunmehr aus einem Ein- bzw. Zweiphasennetz gebildet wird, d.h., daß anstelle der drei Netzanschlußleitungen 16 bis 18 nunmehr maximal zwei Netzanschlußleitungen 16, 17 verwendet werden und somit auch die einzelnen weiteren Bauelemente wie der Netzgleichrichter 8, 9 und die Ladevorrichtung 19 auf ein entsprechendes ein- bzw. zweiphasiges Netz abgestimmt sind. Diese Bauelemente sind jedoch bereits aus dem Stand der Technik bekannt und werden daher nicht näher erläutert.

Ein weiterer Unterschied liegt darin, daß nunmehr anstelle der Schaltvorrichtung 23 ein steuerbarer Netzgleichrichter 9 verwendet wird, d.h., daß anstelle des in Fig. 1 gezeigten Netzgleichrichters 9 mit der vorgeschalteten Schaltvorrichtung 23 nunmehr eine direkte Steuerung des Netzgleichrichters 9 möglich ist. Das Steuerverfahren zum Steuern des Netzgleichrichters 9 ist wiederum aus dem Stand der Technik bekannt und wird daher nicht näher erläutert.

Durch eine derartige Ausbildung der Spannungsumschaltvorrichtung 1 wird erreicht, daß die zusätzliche Schaltvorrichtung 23 eingespart werden kann, sodaß die Baugröße wesentlich verringert werden kann.

In Fig. 3 ist ein Ersatzschaltbild des primärgetakteten Leistungsschaltnetzteils 4, wie in den zuvor beschriebenen Figuren erwähnt, mit den beiden Primärmodulen 5, 6 und einem gemeinsamen Sekundärmodul 36 dargestellt. Selbstverständlich ist es möglich, daß jeder beliebiger Verbraucher 2, 3 bzw. jede beliebige Ausführungsform eines Leistungsschaltnetzteils 4 an den einzelnen Stromkreisen 29, 30 der Spannungsumschaltvorrichtung 1 angeschlossen sein kann.

Es wurde jedoch ein derartiges Ausführungsbeispiel eines primärgetakteten Leistungsschaltnetzteils 4 gewählt, bei dem im primärgetakteten Leistungsschaltnetzteil 4 eine Symmetrievorrichtung 37 zum Symmetrieren der beiden unabhängigen Primärmodule 5, 6, insbesondere der beiden Stromkreise 29, 30, eingesetzt wird. Hierbei ist es nämlich möglich, daß bei unterschiedlichen Ladungen bzw. unterschiedlichem Entzug von Energie aus den beiden Stromkreisen 29, 30 über die Symmetrievorrichtung 37 ein Energieausgleich zwischen den Primärmodulen 5, 6 geschaffen wird, d.h., daß ein Ausgleich der unterschiedlichen Ladungen der Speicherelemente 11, 14 über die Symmetrievorrichtung 37 in den Primärmodulen 5, 6 erzielt wird.

Die beiden Primärmodule 5, 6 sind über einen Transformator 38 mit dem Sekundärmodul 36 verbunden, wobei der Transformator 38 jeweils eine Primärwicklung 39, 40 für jedes Primärmodul 4, 5 und zumindest eine Sekundärwicklung 41 für das Sekundärmodul 36 aufweist.

Damit das Leistungsschaltnetzteil 4 mit Energie, insbesondere mit Strom und Spannung, versorgt werden kann, ist das Leistungsschaltnetzteil 4 über die Spannungsumschaltvorrichtung 1 mit der Energiequelle 7 verbunden. Die Energiequelle 7 wird, wie bereits in den zuvor beschriebenen Figuren erwähnt, beispielsweise aus einem öffentlichen Versorgungsnetz oder einem Generator usw. gebildet, wobei in der schematisch dargestellten Energiequelle 7 die Spannungsumschaltvorrichtung 1 mit strichlierten Linien schematisch dargestellt ist. Die Funktion der Spannungsumschaltvorrichtung 1 kann aus den zuvor beschriebenen Ausführungsbeispielen entnommen werden.

Die beiden Primärmodule 5, 6 bestehen beispielsweise aus einem Hochsetzsteller 42, 43 und jeweils einer Schaltvorrichtung 44, 45, insbesondere einer Halbbrücke 46, 47, für jede Primärwicklung 39, 40 des Transformators 38, wobei die Hochsetzsteller 42, 43 und die Schaltvorrichtungen 44, 45, insbesondere die Halbbrücken 46, 47, bereits aus dem Stand der Technik bekannt sind und daher auf die Funktion der einzelnen Baugruppen nicht näher eingegangen wird. Selbstverständlich ist es möglich, daß anstelle eines Hochsetzstellers 42, 43 und einer Halbbrücke 46, 47 beispielsweise ein Tiefsetzsteller und eine Vollbrücke oder andere Baugruppen zum Versorgen der Primärwicklungen 39, 40 des Transformator 38 mit Energie eingesetzt werden können.

Die beiden Primärmodule 5, 6 sind über Versorgungsleitungen 48 bis 51 mit den einzelnen Stromkreisen 29, 30 der Spannungsumschaltvorrichtung 1 verbunden, wodurch über die Stromkreise 29, 30 die beiden Primärmodule 5, 6 mit Energie beispielsweise aus dem öffentlichen Versorgungsnetz, insbesondere der Energiequelle 7, versorgt werden können. Hierzu wird über die Spannungsumschaltvorrichtung 1 die gelieferte Wechselspannung durch die Netzgleichrichter 8, 9 gleichgerichtet und anschließend über die Versorgungsleitungen 48 bis 51 an die Primärmodule 5, 6 geliefert.

Die beiden Hochsetzsteller 42, 43 sind identisch ausgebildet und bestehen beispielsweise jeweils aus einer Induktivität 52, 53, einem Schaltelement 54, 55, einer Diode 56, 57 und einem Stützkondensator 58, 59, wobei die einzelnen Bauelemente über Leitungen, wie es aus dem Stand der Technik bekannt ist, miteinander verbunden sind. Damit die jeweiligen Schaltelemente 54, 55 gesteuert werden können, weist das primärgetaktete Leistungsschaltnetzteil 4 beispielsweise eine gemeinsame Steuervorrichtung 35 auf. Zur Steuerung der einzelnen Schaltelemente 54, 55 sind in den Primärmodulen 5, 6 einzelne Meßvorrichtungen zum Ermitteln der Spannungshöhe sowie des Stromflusses angeordnet und mit der Steuervorrichtung 35 verbunden, sodaß eine optimale Ansteuerung der beiden Schaltelemente 54, 55 von der Steuervorrichtung 35 erfolgen kann. Die einzelnen Meßvorrichtungen sind jedoch der Übersichtlichkeit halber nicht dargestellt.

Die beiden Hochsetzsteller 42, 43 haben die Aufgabe, die von der Energiequelle 7 bzw. von der Spannungsumschaltvorrichtung 1 gelieferte Gleichspannung um einen entsprechenden Faktor zu erhöhen, sodaß die Schaltvorrichtungen 44, 45, die über Leitungen 60 bis 63 mit den beiden Hochsetzstellern 42, 43 verbunden sind, mit einer entsprechend hohen Energie versorgt werden. Hierzu werden von der Steuervorrichtung 35 die Schaltelemente 54, 55 geschlossen, sodaß zwischen den Versorgungsleitungen 48, 49 und 50, 51 ein Kurzschluß gebildet wird und somit eine Energiespeicherung in der Induktivität 52, 53 erzielt wird. Anschließend werden von der Steuervorrichtung 35 die beiden Schaltelemente 54, 55 geöffnet, sodaß die gespeicherte Energie über die in Durchlaßrichtung angeordnete Diode 56, 57 an die Stützkondensatoren 58, 59 fließen kann. Durch die Anordnung der Stützkondensatoren 58, 59 wird erreicht, daß beim Aktivieren der beiden Schaltvorrichtungen 44, 45, also im Kurzschlußfall, die Schaltvorrichtungen 44, 45 von den Stützkondensatoren 58, 59 aus mit Energie versorgt werden, sodaß eine ununterbrochene Versorgung der Schaltvorrichtungen 44, 45 mit Energie erreicht wird.

Selbstverständlich ist es möglich, daß bei einer derartigen Ausbildung des Leistungsschaltnetzteils 4 der Hochsetzsteller 42, 43 entfallen kann, sodaß die Schaltvorrichtungen 44, 45 über die Stützkondensatoren 58, 59 direkt an die Spannungsumschaltvorrichtung 1 bzw. an die beiden Stromkreise 29, 30 der Spannungsumschaltvorrichtung 1 angeschlossen sein können. Hierzu ist es jedoch möglich, daß die beiden Stützkondensatoren 58, 59 ebenfalls entfallen können, da ein Energiepuffer über die Speicherelemente 11, 14 erfolgen kann und somit bei einer gleichgerichteten Wechselspannung eine Glättung der Gleichspannung durch die Speicherelemente 11, 14 erzielt werden kann.

Die Schaltvorrichtungen 44, 45 werden in dem dargestellten Ausführungsbeispiel als Halbbrücken 46, 47, die durch jeweils zwei Schaltelemente 64 bis 67 und zwei Dioden 68 bis 71 gebildet sind, wie dies aus dem Stand der Technik bekannt ist, ausgebildet, d.h., daß durch Ansteuerung der beiden in der Halbbrücke 46, 47 angeordneten Schaltelemente 64, 65 und 66, 67 aus der gleich gerichteten Gleichspannung wiederum eine Wechselspannung mit höherer Frequenz erzeugt wird, sodaß eine Übertragung der gebildeten Wechselspannung über den Transformator 38 möglich ist. Hierzu sind zusätzlich zu den einzelnen Schaltelementen 64, 65 und 66, 67 jeweils in Serie die Dioden 68, 69 und 70, 71 angeordnet, wodurch eine Entmagnetisierung bei geöffneten bzw. deaktivierten Schaltelementen 64 bis 67 der Primärwicklungen 39, 40 möglich ist. Selbstverständlich ist es möglich, anstelle der Halbbrücke 46, 47 eine Vollbrücke anzuordnen, sodaß anstelle von zwei Schaltelementen 64, 65 und 66, 67 vier Schaltelemente 64 bis 67 in jeder Schaltvorrichtung 44, 45 angeordnet sind und somit ein beliebiges Umkehren des Stromflusses über die Primärwicklungen 39, 40 von der Steuervorrichtung 35 steuerbar ist.

Damit die Primärwicklungen 39, 40 des Transformators 38 mit Energie von den Primärmodulen 5, 6 versorgt werden können, sind die beiden Primärwicklungen 39, 40 über Verbindungsleitungen 72, 73 und 74, 75 zwischen dem Schaltelement 64, 65 und 66, 67 und der in Serie geschalteten Diode 68, 69 und 70, 71 jeder Schaltvorrichtung 44, 45 verbunden. Das Zusammenschalten der Primärwicklungen 39, 40 über die Verbindungsleitungen 72 bis 75 mit den Schaltvorrichtungen 44, 45 ist bereits aus dem Stand der Technik bekannt.

Am Sekundärmodul 36, insbesondere an der Sekundärwicklung 41, können nunmehr unterschiedliche Verbraucher 2 oder 3 angeschlossen werden. Der Verbraucher 2 oder 3 kann aus jedem beliebigen, aus dem Stand der Technik bekannten Verbraucher 2, 3 gebildet sein. Hierzu ist es beispielsweise möglich, daß als Verbraucher 2, 3 ein Schweißbrenner angeordnet sein kann, d.h., daß beispielsweise durch Verbinden bzw. durch Versorgen des Schweißbrenners über die Sekundärwicklung 41 ein Schweißvorgang mit Energie von dem Leistungsschaltnetzteil 4 versorgt werden kann. Bei dem dargestellten Ausführungsbeispiel wird der Verbraucher 2, 3 durch einen einfachen Widerstand schematisch dargestellt. Damit auf der Sekundärseite des Transformators 38 wiederum eine Gleichspannung zur Verfügung steht, ist es möglich, daß eine Gleichrichterschaltung 76 an die Sekundärwicklung 41 angeschlossen werden kann.

Damit nunmehr die beiden Primärmodule 5, 6 symmetrisch zueinander arbeiten, d.h., daß die beiden Primärwicklungen 39, 40 mit dem gleichen Energiefluß versorgt werden, wird eine Symmetrievorrichtung 77 im Leistungsschaltnetzteil 4, insbesondere in den Primärmodulen 5, 6, angeordnet. Die Symmetrievorrichtung 77 wird aus einer Übertragungsvorrichtung 78, insbesondere aus einem Symmetrietrafo 79, gebildet. Der Symmetrietrafo 79 weist jeweils für jedes Primärmodul 5, 6 eine Wicklung 80, 81 auf, wobei die Wicklungen 80, 81 des Symmetrietrafos 79 in Serie zu den Primärwicklungen 39, 40 der beiden Primärmodule 5, 6 in den Verbindungsleitungen 72, 73 angeordnet sind. Die beiden Wicklungen 80, 81 des Symmetrietrafos 79 sind bei dem gezeigten Ausführungsbeispiel gleichsinnig gewickelt. Damit jedoch eine Energieübertragung zwischen den beiden Primärmodulen 5, 6 untereinander stattfinden kann, werden die Wicklungen 80, 81 des Symmetrietrafos 79 in einem Primärmodul 5 oder 6, insbesondere im Primärmodul 5, mit dem Wicklungsende der Primärwicklung 39 und am weiteren Primärmodul 6 mit dem Wicklungsanfang der Primärwicklung 40 oder umgekehrt zusammengeschaltet. Der Wicklungsanfang der einzelnen verwendeten Wicklungen 80, 81 bzw. der Primärwicklungen 39, 40 oder der Sekundärwicklung 41 wird durch einen Punkt dargestellt.

Durch eine derartige Anordnung der Symmetrievorrichtung 77, insbesondere der Wicklungen 80, 81 des Symmetrietrafos 79, wird erreicht, daß bei einem Energieüberschuß bzw. bei unterschiedlichen Ladungen der Stützkondensatoren 58, 59 bzw. der Speicherelemente 11, 14 durch die Energiequelle 7 ein Energieausgleich zwischen den beiden Primärmodulen 5, 6 erzielt wird, d.h., daß aufgrund der unterschiedlichen Magnetfelder in den Wicklungen 80, 81 durch den unterschiedlichen Energiedurchfluß durch die Wicklungen 80, 81 von den einzelnen Primärmodulen 5 oder 6 die Differenz, insbesondere die Hälfte der Differenz, des Energieüberschusses auf das weitere Primärmodul 6 oder 5 übertragen wird. Durch eine derartige Übertragung des Energieüberschusses bzw. der Differenz des Energieüberschusses wirkt die Wicklung 80 oder 81 des Symmetrietrafos 79 mit der geringeren gelieferten Energiemenge als zusätzliche Energiequelle, sodaß zu der Energiequelle 7 bzw. zu den Stützkondensatoren 58, 59 und der gebildeten zusätzlichen Energiequelle 7 durch die Wicklung 80 oder 81 die beiden Energiemengen zusammenaddiert werden. Bei dem Primärmodul 5 oder 6 mit der höheren gelieferten Energiemenge von der Energiequelle 7 wird dabei die übertragene Energie von der gelieferten Energiemenge subtrahiert, sodaß an den beiden Primärwicklungen 39, 40 des Transformators 38 die gleiche Energiemenge bzw. die gleiche Spannungshöhe anliegt.

Damit jedoch ein entsprechend in den beiden Richtungen funktionierender Energieausgleich durchgeführt werden kann, weisen die beiden Wicklungen 80, 81 des Symmetrietrafos 79 die gleiche Windungsanzahl auf, sodaß eine Erhöhung bzw. Reduzierung der übertragenen, Energiemenge verhindert wird. Der Vorteil durch die Anordnung der Symmetrievorrichtung 77 in Form des Symmetrietrafos 79 liegt nun darin, daß durch den Energieausgleich an den beiden Primärwicklungen 39, 40 des Transformators 38 eine gleichmäßige Ansteuerung der beiden Primärwicklungen 39, 40 erzielt wird, wodurch ein unsymmetrisches Betreiben des Transformators 38 unterbunden wird und somit die Verluste, die in Form von Wärmeenergie am Transformator 38 auftreten, reduziert werden. Ein weiterer Vorteil zum Ausbilden eines derartigen Leistungsschaltnetzteils 4 liegt darin, daß die einzelnen Bauelemente, die zum Speisen des Verbrauchers 2, 3 verwendet werden, geringer dimensioniert werden können, da durch die Verwendung von zwei Primärmodulen 5, 6 eine doppelte Energieversorgung des Verbrauchers 2, 3 erzielt wird. Bei den aus dem Stand der Technik bekannten Leistungsschaltnetzteilen 4 wird der Transformator 38 bevorzugt aus nur einem Primärmodul 5 oder 6 angesteuert, sodaß, um die gleiche Energiemenge übertragen zu können, das Primärmodul 5 oder 6 mit entsprechend hoher Energiemenge versorgt werden muß, sodaß eine hohe Dimensionierung der Bauelemente nötig ist, um eine einwandfreie Energieübertragung sicherstellen zu können. Durch das gezeigte Ausführungsbeispiel des Leistungsschaltnetzteils 4 wird eine Halbierung der Energiemenge in jedem Primärmodul 5, 6 erreicht, wobei diese Energiemengen anschließend gemeinsam über den Transformator 38 übertragen werden, sodaß der Verbraucher 2, 3 wiederum mit der gleichen Energiemenge versorgt werden kann.

Durch die Anordnung des Symmetrietrafos 79 wird nunmehr erreicht, daß bei unterschiedlicher Belastung der Primärmodule 5, 6 bzw. bei unterschiedlicher Versorgung der einzelnen Primärmodule 5, 6 aus dem Primärmodul 5, 6 mit der höheren zur Verfügung stehenden Energie mehr Energie entzogen wird, sodaß ein gleichmäßiges Versorgen der beiden Primärwicklungen 39, 40 des Transformators 38 für die Energieübertragung geschaffen wird, d.h., daß eine Energieübertragung von einem Primärmodul 5, 6 auf das weitere Primärmodul 6, 5 durch den Symmetrietrafo 79 erfolgt, wodurch ein Energieausgleich an den Primärwicklungen 39, 40 des Transformators 38 geschaffen wird. Wird beispielsweise das Primärmodul 5 mit einer Spannungshöhe von 350 V versorgt, d.h., daß der Stützkondensator 58 auf 350 V aufgeladen wird, und wird das Primärmodul 5, insbesondere der Stützkondensator 59, mit einer Spannung in Höhe von beispielsweise 250 V versorgt, so ergibt sich eine Spannungsdifferenz von 100 V zwischen den beiden Primärmodulen 5, 6. Durch Aktivieren der einzelnen Schaltelemente 64 bis 67 der Schaltvorrichtungen 44, 45 würden nun diese Spannungen, die am Stützkondensator 58, 59 anliegen, ohne der Symmetrievorrichtung 77 an die Primärwicklungen 39, 40 des Transformators 38 geliefert, wodurch am Transformator 38 eine Unsymmetrie entstehen würde, da jede Primärwicklung 39, 40 mit einer unterschiedlichen Spannungshöhe versorgt wird, sodaß es zu hohen Verlusten bei der Übertragung von der Primärseite auf die Sekundärseite des Transformators 38 kommt.

Durch die Anordnung der Symmetrievorrichtung 77, insbesondere der Übertragungsvorrichtung 78, wird ein Energieausgleich in den Primärmodulen 5, 6 bewirkt, d.h., daß durch die Differenz der Spannung von beispielsweise 100 V diese Spannung nunmehr über die Symmetrievorrichtung 77 halbiert wird und von dem Primärmodul 5 über den Symmetrietrafo 79 an das weitere Primärmodul 6 übertragen wird, wodurch ein Energieausgleich an den Primärwicklungen 39, 40 entsteht. Bei einer derartigen Differenz von beispielsweise 100 V wird nunmehr von dem Primärmodul 5 über den Symmetrietrafo 79 eine Spannung von 50 V an das weitere Primärmodul 6 übertragen, sodaß die beiden Primärwicklungen 39, 40 mit einer Spannungshöhe von jeweils 300 V versorgt werden und somit ein Symmetrieausgleich und eine verlustlose Übertragung über den Transformator 38 erreicht wird. Dieser Energieausgleich ist jedoch auch in umgekehrter Weise möglich, sodaß ein Energietransfer vom Primärmodul 6 auf das Primärmodul 5 durchgeführt werden kann.

Weiters ist es möglich, daß mehrere parallel zueinander arbeitende Primärmodule 5, 6 über einen entsprechenden Symmetrietrafo 79 mit jeweils einer Wicklung 80, 81 für jedes Primärmodul 5, 6 symmetriert werden können, wodurch die Versorgung eines Verbrauchers 2, 3 aus mehreren, beispielsweise drei oder vier Primärmodulen 5, 6 jederzeit möglich ist. Selbstverständlich ist es auch möglich, daß für jede Primärwicklung 39, 40 eine eigene Sekundärwicklung 41 mit jeweils einem eigenen unabhängigen Verbraucher 2, 3 eingesetzt werden kann. Wird bei einem derartigen System, wie anschließend in den unterschiedlichen, dargestellten Ausführungsbeispielen gezeigt, die Symmetrievorrichtung 77 eingesetzt, so wird ein Energieausgleich unter den einzelnen Primärmodulen 5, 6 geschaffen, sodaß eine unregelmäßige Energieentnahme aus den Primärmodulen 5, 6 unterbunden wird.

Es ist auch möglich, daß der Symmetrietrafo 79, insbesondere die Wicklungen 80, 81, mit einem umgekehrten Wicklungssinn gewickelt werden können. Hierzu müssen die Wicklungen 80, 81 der Symmetrievorrichtung 77 derart mit den Primärwicklungen 39, 40 des Transformators 38 verbunden werden, daß beide Wicklungen 80, 81 entweder am Wicklungsanfang der Primärwicklungen 39, 40 oder am Wicklungsende der Primärwicklungen 39, 40 in Serie geschaltet sind. Durch die Umkehr des Wicklungssinnes von der Primärwicklung 39 oder 40 zur Primärwicklung 40 oder 39 wird eine umgekehrte Energieübertragung erreicht, sodaß wiederum eine sogenannte Energiequelle zum Speisen der Primärmodule 5 oder 6 geschaffen wird. Hierzu ist jedoch darauf zu achten, daß entsprechend dem Wicklungssinn der Wicklungen 80, 81 des Symmetrietrafos 79 diese mit den Primärwicklungen 39, 40 des Transformators 38 zusammengeschaltet werden.

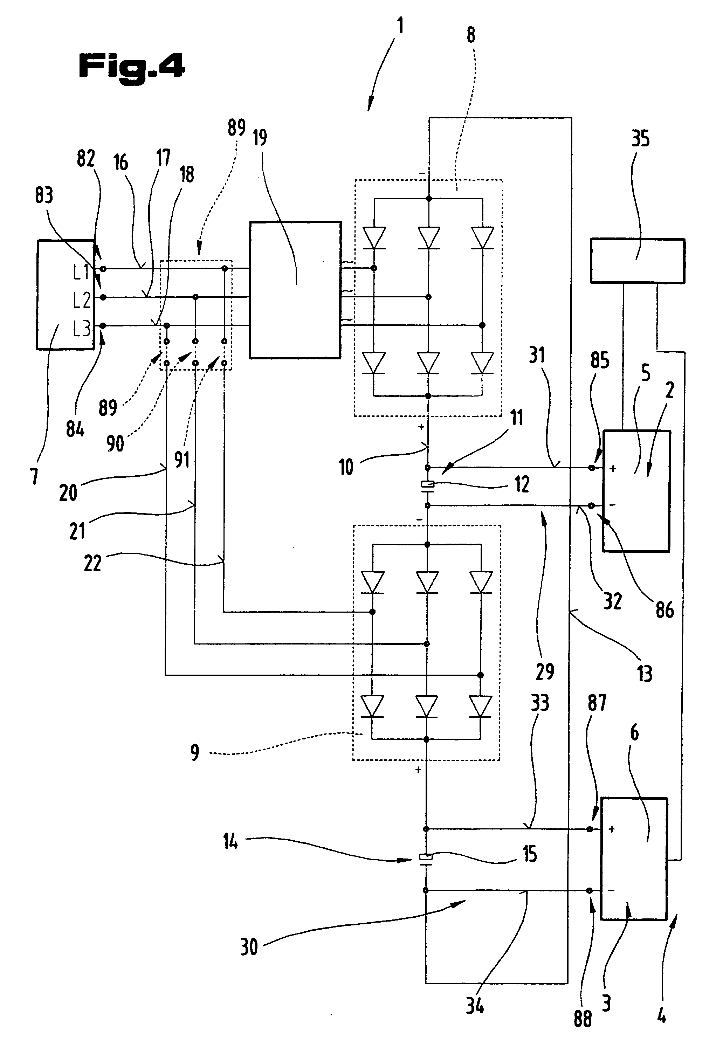

In Fig. 4 ist ein anderes Ausführungsbeispiel der erfindungsgemäßen Spannungsumschaltvorrichtung 1 gezeigt, wobei für dieselben Teile der zuvor beschriebenen Ausführungsform die gleichen Bezugszeichen verwendet werden.

Bei diesem Ausführungsbeispiel wird die Spannungsumschaltvorrichtung 1 als Kompaktgerät ausgebildet, wobei nunmehr die Umschaltung zum Versorgen der beiden Speicherelemente 11, 14 über die beiden Netzgleichrichter 8, 9 nicht automatisch über die Netzauswertevorrichtung 26 durchgeführt wird, sondern von einem Anwender per Hand durchgeführt werden muß.

Das Kompaktgerät ist dabei derartig ausgebildet, daß die einzelnen elektronischen Bauelemente in einem Gehäuse untergebracht sind, sodaß ein Anwender keinen direkten Zugang zu den elektronischen Bauteilen hat. Damit jedoch die einzelnen Komponenten, wie die Energiequelle 7 und die Verbraucher 2, 3, insbesondere das Leistungsschaltnetzteil 4, an die Spannungsumschaltvorrichtung 1 angeschlossen werden können, weist das Kompaktgerät einzelne mechanische Klemmen für den Anschluß der einzelnen externen Komponenten auf. Hierzu kann die Energiequelle 7 über Eingänge 82 bis 84 über die Netzanschlußleitungen 16 bis 18 mit der Spannungsumschaltvorrichtung 1 verbunden werden. Die Verbraucher 2, 3 werden jeweils über zwei Ausgänge 85, 86 und 87, 88 an die Spannungsumschaltvorrichtung 1 angeschlossen, sodaß die Ausgänge 85, 86 den ersten Stromkreis 29 ausbilden, wogegen die Ausgänge 87, 88 den weiteren zweiten Stromkreis 30 bilden.

Weiters weist das Ausführungsbeispiel einen Klemmblock 89 auf, über den die Netzleitungen 20 bis 22 geführt sind, sodaß aufgrund des Klemmblockes 89, wie es aus dem Stand der Technik bekannt ist, eine Unterbrechung der Netzleitungen 20 bis 22 hervorgerufen wird. Die Netzleitungen 20 bis 22 sind einerseits direkt mit den Netzanschlußleitungen 16 bis 18 des ersten Netzgleichrichters 8 verbunden und andererseits wiederum direkt mit dem weiteren Netzgleichrichter 9 zusammengeschaltet. Da nunmehr ein Klemmblock 89 für die Netzleitungen 20 bis 22 angeordnet ist, kann die Netzauswertevorrichtung 26 und die Schaltvorrichtung 23 der Spannungsumschaltvorrichtung 1, wie sie in Fig. 1 beschrieben ist, entfallen.

Der Betreiber bzw. der Anwender hat nunmehr die Möglichkeit, daß er durch Einsetzen einer für jede Netzleitung 20 bis 22 vorgesehenen Brücke 90 bis 92, die strichliert dargestellt ist, ein Zusammenschalten der beiden Netzgleichrichter 8 und 9 erreicht, d.h., daß durch Einsetzen der Brücken 90 bis 92 die von der Energiequelle 7 gelieferte Energie gleichzeitig an den Netzgleichrichter 8 und den weiteren Netzgleichrichter 9 geliefert wird. Hierzu ist es jedoch von Vorteil, daß zwischen dem Klemmblock 89 und dem weiteren Netzgleichrichter 9 eine weitere Ladevorrichtung angeordnet ist, sodaß durch ein direktes Beaufschlagen der gelieferten Energiemenge an den Speicherelementen 11, 14 ein entsprechend hoher Kurzschlußstrom bzw. Einschaltstrom verhindert wird.

Durch eine derartige Ausbildung der Spannungsumschaltvorrichtung 1 wird nun erreicht, daß ein Benutzer selbständig eine Anpassung an seine verwendete Energiequelle 7 durchführen kann, d.h., daß der Benutzer bei der Inbetriebnahme der Spannungsumschaltvorrichtung 1 oder eines Gerätes, in dem die Spannungsumschaltvorrichtung 1 eingebaut ist, vorab durch entsprechendes Switchen bzw. Schalten des Klemmblockes 89 mit handelsüblichen Brücken 90 bis 92 eine Anpassung an das nationale öffentliche Versorgungsnetz durchführen kann. Hierzu ist es selbstverständlich auch möglich, daß anstelle eines Klemmblockes 89 eine mechanische Schaltvorrichtung eingesetzt werden kann, wodurch der Benutzer durch einfaches Betätigen des Schalters eine Umschaltung der Spannungsumschaltvorrichtung 1 zum Betreiben beispielsweise eines 400 V Spannungsversorgungsnetzes oder eines 230 V Spannungsversorgungsnetzes durchführen kann.

Eine derartige Spannungsumschaltvorrichtung 1 kann beispielsweise in Batterieladegeräten, Schweißgeräten und anderen Geräten bzw. Anlagen, die bevorzugt über ein öffentliches Versorgungsnetz betrieben werden, eingesetzt werden, wodurch ein weltweiter Vertrieb dieser Geräte mit einer derartigen Spannungsumschaltvorrichtung 1 möglich ist, da durch einfaches Switchen des Klemmblockes 89 oder durch die, wie in Fig. 1 beschrieben, automatische Umschaltung über die Schaltvorrichtung 23 eine einfache Anpassung an die unterschiedlichen Spannungen der öffentlichen Versorgungsnetze durchgeführt werden kann.

Bei dem dargestellten Ausführungsbeispiel ist nunmehr das Umschalten bzw. das Anschalten des weiteren Netzgleichrichters 9 an die Energiequelle 7 durch den Klemmblock 89 verwirklicht. Hierzu kann der Benutzer bei Nichtbenötigung des weiteren Netzgleichrichters 9, also bei einem Spannungsversorgungsnetz beispielsweise mit 400 V, die einzelnen Brücken 90 bis 92 für die Netzleitungen 20 bis 22 entfernen, wodurch ein Betreiben der Spannungsumschaltvorrichtung 1 nur über den Netzgleichrichter 8 durchgeführt wird. Möchte jedoch der Benutzer dieses Gerätes mit einer derartig eingebauten Spannungsumschaltvorrichtung 1 dieses Gerät an einem anderen öffentlichen Versorgungsnetz, insbesondere einer Energiequelle 7, mit geringerer Spannungshöhe, beispielsweise von nur 230 V, einsetzen, so kann er durch einfaches Switchen des Klemmblockes 89, also durch Verbinden der Klemmstellen des Klemmblockes 89 über die Brücken 90 bis 92, wie dies strichliert dargestellt ist, ein Betreiben des Gerätes mit einer niedrigeren Versorgungsspannung durchführen, da durch das Switchen bzw. Schalten des Klemmblockes 89 eine direkte Anschaltung des weiteren Netzgleichrichters 9 an die Netzanschlußleitungen 16 bis 18 durchgeführt wird, und somit, wie in Fig. 1 beschrieben, ein Versorgen bzw. Laden der beiden Speicherelemente 11 und 14 über die beiden Netzgleichrichter 8, 9 parallel erfolgt.

Selbstverständlich ist es möglich, daß die in den gezeigten Ausführungsbeispielen verwendeten Bauelemente durch andere, beliebige, aus dem Stand der Technik verwendete Bauelemente mit demselben Funktionsablauf eingesetzt werden können.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

Die den eigenständigen erfinderischen Lösungen zugrundeliegende Aufgabe kann der Beschreibung entnommen werden.

Weiters können auch Einzelmerkmale der einzelnen Ausführungsbeispiele mit anderen Einzelmerkmalen von anderen Ausführungsbeispielen oder jeweils für sich alleine den Gegenstand von eigenständigen, erfindungsgemäßen Lösungen bilden.

Vor allem können die in den einzelnen Fig. 1; 2; 3; 4 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Spannungsumschaltvorrichtung
- 2: Verbraucher
- 3: Verbraucher
- 4: Leistungsschaltnetzteil
- 5: Primärmodul

- 6: Primärmodul
- 7: Energiequelle
- 8: Netzgleichrichter
- 9: Netzgleichrichter
- 10: Leitung

- 11: Speicherelement
- 12: Kondensator
- 13: Leitung
- 14: Speicherelement
- 15: Kondensator

- 16: Netzanschlußleitung
- 17: Netzanschlußleitung
- 18: Netzanschlußleitung
- 19: Ladevorrichtung
- 20: Netzleitung

- 21: Netzleitung
- 22: Netzleitung
- 23: Schaltvorrichtung
- 24: Schalter
- 25: Erregermodul

- 26: Netzauswertevorrichtung
- 27: Leitung
- 28: Leitung
- 29: Stromkreis
- 30: Stromkreis

- 31: Leitung
- 32: Leitung
- 33: Leitung
- 34: Leitung
- 35: Steuervorrichtung

- 36: Sekundärmodul
- 37: Symmetrievorrichtung
- 38: Transformator
- 39: Primärwicklung
- 40: Primärwicklung

- 41: Sekundärwicklung
- 42: Hochsetzsteller
- 43: Hochsetzsteller
- 44: Schaltvorrichtung
- 45: Schaltvorrichtung

- 46: Halbbrücke
- 47: Halbbrücke
- 48: Versorgungsleitung
- 49: Versorgungsleitung
- 50: Versorgungsleitung

- 51: Versorgungsleitung
- 52: Induktivität
- 53: Induktivität
- 54: Schaltelement
- 55: Schaltelement

- 56: Diode
- 57: Diode
- 58: Stützkondensator
- 59: Stützkondensator
- 60: Leitung

- 61: Leitung
- 62: Leitung
- 63: Leitung
- 64: Schaltelement
- 65: Schaltelement

- 66: Schaltelement
- 67: Schaltelement
- 68: Diode
- 69: Diode
- 70: Diode

- 71: Diode
- 72: Verbindungsleitung
- 73: Verbindungsleitung
- 74: Verbindungsleitung
- 75: Verbindungsleitung

- 76: Gleichrichterschaltung
- 77: Symmetrievorrichtung
- 78: Übertragsungsvorrichtung
- 79: Symmetrietrafo
- 80: Wicklung

- 81: Wicklung
- 82: Eingang
- 83: Eingang
- 84: Eingang
- 85: Ausgang

- 86: Ausgang
- 87: Ausgang
- 88: Ausgang
- 89: Klemmblock
- 90: Brücke

- 91: Brücke
- 92: Brücke

## Patentansprüche

1. Spannungsumschaltvorrichtung, bestehend aus zumindest zwei Netzgleichrichtern, zwei Speicherelementen, einer Ladevorrichtung und mehreren Netzanschlußleitungen, wobei der erste Netzgleichrichter über Leitungen mit der Ladevorrichtung und diese über die Netzanschlußleitungen mit einer Energiequelle verbunden ist und der zweite Netzgleichrichter gegenüber der Energiequelle durch eine Netzauswertevorrichtung an- bzw. abschaltbar ist, wenn die von der Energiequelle gelieferte Energie oberhalb bzw. unterhalb eines in der Netzauswertevorrichtung hinterlegten Wertes liegt und weiters mit dem Verbraucher verbunden ist, **dadurch gekennzeichnet, daß** das positive Potential des ersten Netzgleichrichters (8) unter Zwischenschaltung des ersten Speicherelementes (11) mit dem negativen Potential des zweiten Netzgleichrichters (9) verbunden ist, wobei das positive Potential des zweiten Netzgleichrichters (9) unter Zwischenschaltung des zweiten Speicherelementes (14) mit dem negativen Potential des ersten Netzgleichrichters (8) zusammengeschalten ist, wobei der zweite Netzgleichrichter (9) über eine Schaltvorrichtung (23) mit der Energiequelle (7) schaltbar verbunden ist, wobei mit der Ladevorrichtung (19) die Netzauswertevorrichtung (26) gekoppelt ist und zur Versorgung zumindest eines Verbrauchers (2, 3) jedes der beiden Speicherelemente (11, 14) in einem von zwei unabhängigen Stromkreisen (29, 30) angeordnet ist.

2. Spannungsumschaltvorrichtung nach Anspruch 1, **dadurch gekennzeichnet, daß** die Netzauswertevorrichtung (26) mit der Schaltvorrichtung (23) gekoppelt ist.

3. Spannungsumschaltvorrichtung nach Anspruch 1 oder 2, **dadurch gekennzeichnet, daß** die Schaltvorrichtung (23) beispielsweise durch ein elektronisches Lastrelais, durch Triac's oder Schalter usw. gebildet ist.

4. Spannungsumschaltvorrichtung nach einem oder mehreren der vorhergehenden Ansprüche, **dadurch gekennzeichnet, daß** die Speicherelemente (11, 14) durch Kondensatoren (12, 15) gebildet sind.

5. Spannungsumschaltvorrichtung nach einem oder mehreren der vorhergehenden Ansprüche, **dadurch gekennzeichnet, daß** die Energiequelle (7) aus einem ein- oder mehrphasigen Netz gebildet ist.

6. Spannungsumschaltvorrichtung nach einem oder mehreren der vorhergehenden Ansprüche, **dadurch gekennzeichnet, daß** der weitere Netzgleichrichter (8, 9) aus einer steuerbaren Gleichrichterbrücke gebildet ist.

7. Spannungsumschaltvorrichtung nach einem oder mehreren der vorhergehenden Ansprüche, **dadurch gekennzeichnet, daß** der Verbraucher (2, 3) beispielsweise durch zwei symmetrisch arbeitende Primärmodule (5, 6), die zumindest einen oder mehrere Transformatoren (38) ansteuern, gebildet ist.

8. Spannungsumschaltvorrichtung nach einem oder mehreren der vorhergehenden Ansprüche, **dadurch gekennzeichnet, daß** die beiden symmetrisch arbeitenden Primärmodule (5, 6) über jedes Speicherelement (11, 14) einen unabhängigen Stromkreis (29, 30) bilden.

9. Spannungsumschaltvorrichtung nach einem oder mehreren der vorhergehenden Ansprüche, **dadurch gekennzeichnet, daß** zur Steuerung des Verbrauchers (2, 3), insbesondere der Primärmodule (5, 6), und gegebenenfalls der Spannungsumschaltvorrichtung (1) eine Steuervorrichtung (35) angeordnet ist, die beispielsweise durch eine Mikroprozessorsteuervorrichtung gebildet ist.

## Claims

1. Voltage-switching system consisting of at least two mains rectifiers, two storage elements, a charging device and several mains cables, the first mains rectifier being connected by lines to the charging device which is in turn connected via the mains cables to a power source, and the second mains rectifier can be connected and disconnected to and from the power source by a mains evaluation device if the power supplied by the power source is above or below a value stored in the mains evaluation device and is also connected to the terminal consumer, **characterised in that** the positive potential of the first mains rectifier (8) is connected to the negative potential of the second mains rectifier (9) inter-connecting via the first storage element (11) and the positive potential of the second mains rectifier (9) is connected to the negative potential of the first mains rectifier (8) inter-connecting via the second storage element (14), the second mains rectifier (9) is connected so that it can be switched to the power source (7) via a switching device (23), the mains evaluation device (26) is coupled with the charging device (19), and at least one terminal consumer (2, 3) of each of the two storage elements (11, 14) is disposed in one of two independent current circuits (29, 30) for its power supply.

2. Voltage-switching system as claimed in claim 1, **characterised in that** the mains evaluation device (26) is coupled with the switching device (23).

3. Voltage-switching system as claimed in claim 1 or 2, **characterised in that** the switching device (23) is provided in the form of an electronic load relay by means of triacs or switches, etc..

4. Voltage-switching system as claimed in one or more of the preceding claims, **characterised in that** the storage elements (11, 14) are provided in the form of capacitors (12, 15).

5. Voltage-switching system as claimed in one or more of the preceding claims, **characterised in that** the power source (7) is a single-phase or polyphase network.

6. Voltage-switching system as claimed in one or more of the preceding claims, **characterised in that** the other mains rectifier (8, 9) is a controllable rectifier bridge.

7. Voltage-switching system as claimed in one or more of the preceding claims, **characterised in that** the terminal consumer (2, 3) is provided in the form of two symmetrically operating primary modules (5, 6), for example, which activate at least one or more transformers (38).

8. Voltage-switching system as claimed in one or more of the preceding claims, **characterised in that** the two symmetrically operating primary modules (5,6) form an independent circuit (29, 30) across each storage element (11, 14).

9. Voltage-switching system as claimed in one or more of the preceding claims, **characterised in that** a control system (35), for example a microprocessor control system, is provided as a means of controlling the terminal consumer (2, 3), in particular the primary modules (5, 6), and optionally the voltage-switching system (1).

## Revendications

1. Dispositif de commutation de tension, constitué d'au moins deux redresseurs de réseau, de deux éléments d'accumulation, d'un dispositif de charge et de plusieurs lignes de raccordement au réseau, où le premier redresseur de réseau est relié par des lignes au dispositif de charge et celui-ci par les lignes de raccordement au réseau à une source d'énergie, et le deuxième redresseur de réseau peut être mis en ou hors service par rapport à la source d'énergie par un dispositif d'évaluation de réseau, lorsque l'énergie fournie par la source d'énergie se situe au-dessus ou en dessous d'une valeur stockée dans le dispositif d'évaluation du réseau et est relié en outre à l'utilisateur, **caractérisé en ce que** le potentiel positif du premier redresseur de réseau (8), en intercalant le premier élément d'accumulation (11), est relié au potentiel négatif du deuxième redresseur de réseau (9), où le potentiel positif du deuxième redresseur de réseau (9), en intercalant le deuxième élément d'accumulation (14), est connecté au potentiel négatif du premier redresseur de réseau (8), où le deuxième redresseur de réseau (9) est relié d'une manière commutable par un dispositif de commutation (23) à la source d'énergie (7), où le dispositif d'évaluation de réseau (26) est couplé au dispositif de charge (19) et, pour l'alimentation d'au moins un utilisateur (2, 3), chacun des deux éléments d'accumulation (11, 14) est disposé dans l'un de deux circuits indépendants (29, 30).

2. Dispositif de commutation de tension selon la revendication 1, **caractérisé en ce que** le dispositif d'évaluation de réseau (26) est couplé au dispositif de commutation (23).

3. Dispositif de commutation de tension selon la revendication 1 ou 2, **caractérisé en ce que** le dispositif de commutation (23) est formé, par exemple, par un relais de charge électronique, par des triac ou des commutateurs et analogues.

4. Dispositif de commutation de tension selon l'une ou plusieurs des revendications précédentes, **caractérisé en ce que** les éléments d'accumulation (11, 14) sont formés par des condensateurs (12, 15).

5. Dispositif de commutation de tension selon l'une ou plusieurs des revendications précédentes, **caractérisé en ce que** la source d'énergie (7) est réalisée par un réseau monophasé ou polyphasé.

6. Dispositif de commutation de tension selon l'une ou plusieurs des revendications précédentes, **caractérisé en ce que** l'autre redresseur de réseau (8, 9) est formé par un redresseur en pont apte à être commandé.

7. Dispositif de commutation de tension selon l'une ou plusieurs des revendications précédentes, **caractérisé en ce que** l'utilisateur (2, 3) est formé, par exemple, par deux modules primaires (5, 6) fonctionnant d'une manière symétrique, qui commandent au moins un ou plusieurs transformateurs (38).

8. Dispositif de commutation de tension selon l'une ou plusieurs des revendications précédentes, **caractérisé en ce que** les deux modules primaires fonctionnant d'une manière symétrique (5, 6) forment par chaque élément d'accumulation (11, 14) un circuit indépendant (29, 30).

9. Dispositif de commutation de tension selon l'une ou plusieurs des revendications précédentes, **caractérisé en ce que** pour la commande de l'utilisateur (2, 3), notamment des modules primaires (5, 6) et le cas échéant du dispositif de commutation de tension (1), un dispositif de commande (35) est disposé qui est constitué, par exemple, par un dispositif de commande à micro-processeur.
